# EUROPEAN PATENT APPLICATION

(11) **EP 4 851 105 A1**
(43) Date of publication of application: **09.12.2026**
(21) Application number: 26174415.5
(22) Date of filing: 24.04.2026
(51) Int. Cl.: C01B 3/065, B01J 8/06

(54) **WATER COOLED HYDROGEN GENERATOR**

(30) Priority: 02.06.2025 US 202519225021
(71) Applicant: Honeywell International Inc., Charlotte, NC 28202 (US)
(72) Inventor: COTE, Tyler, Charlotte, 28202 (US); STRAVATO, Jeffrey, Charlotte, 28202 (US); KALE, Matt, Charlotte, 28202 (US); DEL SIGNORE, Philip, Charlotte, 28202 (US); DZIENGELESKI, Seth, Charlotte, 28202 (US); HARRINGTON, Forrest, Charlotte, 28202 (US); NAVALE, Rahul, Charlotte, 28202 (US); PARK, Jong, Charlotte, 28202 (US); KNAEBLE, William, Charlotte, 28202 (US); CENTA, Andrew, Charlotte, 28202 (US)
(74) Representative: Ingrassia, Fisher & Lorenz UK Ltd.

(57) **Abstract**

A hydrogen reactor includes a container having a hydrogen input opening and multiple tubes, containing a granularized hydrogen fuel, disposed within the container. A multichannel manifold is coupled to the multiple tubes within the container to receive recirculated hydrogen via the hydrogen input opening. The reactor includes means for humidifying the hydrogen from water disposed within the container outside the multiple tubes. The multichannel manifold is coupled to the means for humidifying the hydrogen to provide humidified hydrogen to first ends of the multiple tubes and is coupled to second ends of the multiple tubes to receive additional hydrogen generated by reaction of the humidified hydrogen with the granularized hydrogen fuel.

## Description

This invention was made with Government support under 912CG22C0008 awarded by Army Contracting Command. The Government has certain rights in the invention.

### BACKGROUND

Certain chemical hydrides when paired with a proton exchange membrane fuel cell have the potential to achieve energy densities far in excess of that currently achievable with batteries. These hydrides require a lightweight fuel storage and reactor design to unlock this potential benefit.

Unmanned vehicles, in particular UAVs are limited by the energy density of their power source (often lithium-ion batteries). Having a power source that has 3 to 4 times higher energy density than existing batteries will provide significant value for UAVs.

### SUMMARY

A hydrogen reactor includes a container having a hydrogen input opening and multiple tubes, containing a granularized hydrogen fuel, disposed within the container. A multichannel manifold is coupled to the multiple tubes within the container to receive recirculated hydrogen via the hydrogen input opening. The reactor includes means for humidifying the hydrogen from water disposed within the container outside the multiple tubes. The multichannel manifold is coupled to the means for humidifying the hydrogen to provide humidified hydrogen to first ends of the multiple tubes and is coupled to second ends of the multiple tubes to receive additional hydrogen generated by reaction of the humidified hydrogen with the granularized hydrogen fuel.

### BRIEF DESCRIPTION OF THE DRAWINGS

FIG. 1 is a perspective cross section representation of an improved hydrogen reactor according to an example embodiment.
FIG. 2 is a block cross section diagram of an alternative improved hydrogen reactor according to an example embodiment.
FIG. 3 is a perspective view of a representation of an array of fuel tubes according to an example embodiment.
FIG. 4 is a flowchart illustrating a method 400 using water in a hydrogen reactor chamber to both humidify hydrogen for producing additional hydrogen from fuel containing tubes disposed in the water and cool the tubes according to an example embodiment.

### DETAILED DESCRIPTION

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

An improved hydrogen reactor for producing hydrogen for a fuel cell includes a series of hydride fuel filled thin-walled tubes. The tubes are manifolded together and disposed in a water bath held in a cavity of the reactor. Hydrogen gas received from a hydrogen gas recirculation loop is humidified by the water bath. The humidified hydrogen is flowed through the fuel filled tubes where water vapor reacts exothermically with the fuel causing the fuel to releases more hydrogen, resulting in a dry hydrogen output.

The hydrogen produced is provided to the recirculation loop and may be used by the fuel cell to produce electricity to power to devices, such as vehicles and in one example, an unmanned aerial vehicle (UAV). The improved hydrogen reactor is configured such that the water provides heat transfer, cooling, and hydrogen gas humidification features into a single light weight, volume efficient design. The water in the cavity simultaneously humidifies the process stream and cools the fuel filled tubes of the exothermic hydrogen reactor.

The use of multiple tubes balances the flow through the reactor while optimizing heat transfer and fuel volume. A membrane may be used to separate the fuel from direct contact with liquid water. A relief valve may be used to drain the reactor of water in the event of an overpressure condition. A recirculation blower may be used to circulate the hydrogen in the recirculation loop as well as through the reactor.

During reaction of the fuel with the water in the humidified hydrogen entering the tubes, one of the tubes may have a slightly lower pressure drop than the others because of a natural variation in packing of the fuel. That tube would see slightly higher flow causing fuel to react more aggressively than perhaps in other tubes. As result of the reaction, the fuel expands resulting in a higher pressure drop than in other tubes causing the flow in other tubes to increase. By this process, a balancing of the utilization of fuel across the tubes is achieved.

At the same time, water within the cavity is consumed. In order to reduce the weight of the hydrogen reactor, it may be desired to use a total volume of water that is sufficient to react all the fuel in the tubes with very little water left in the cavity. In some examples, additional water may be used if the cooling function of the water is still desired at the time the reaction is complete.

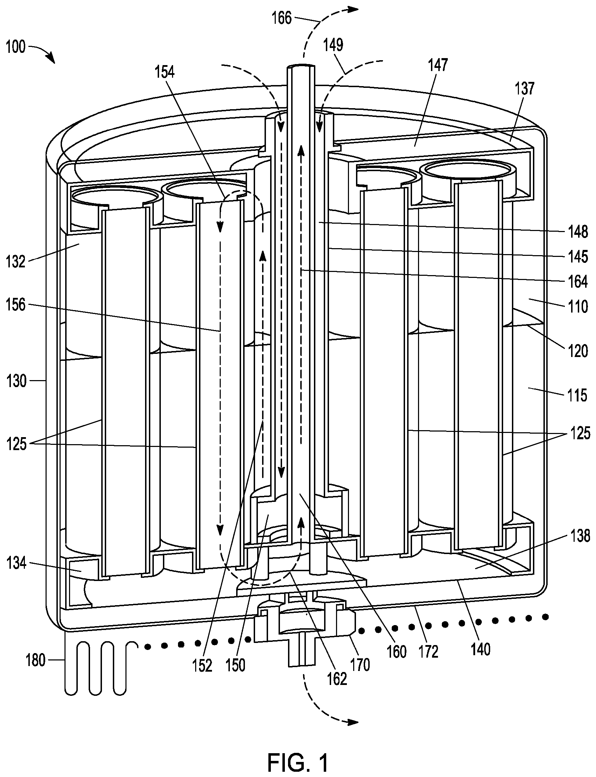

FIG. 1 is a perspective cross section representation of an improved hydrogen reactor 100. The reactor 100 includes a cavity 110 configured to contain, or containing water 115 filled to a level 120. Multiple fuel tubes 125 containing granularized hydrogen fuel 127, such as LiAH4 are disposed at least partially in the water 115 in cavity 110. Cavity 110 may be bounded by side walls 130 of the reactor 100 and a top plate 132 and bottom plate 134. The tubes 125 extend between the top plate 132 and bottom plate 134.

A top of each tube 125 is accessible for gas flow in a top chamber 136 formed between the top plate132 and a top 137 of cavity 110. A bottom of each tube 125 is accessible for gas flow in a bottom chamber 138 formed between the bottom plate134 and lower plate 140 of cavity 110.

A plenum 145 is positioned through a top container plate 147 and extends to the bottom plate 134. The plenum 145 includes a first passage 148 coupleable to receive hydrogen as shown at arrow 149, which may include some water vapor from an anode of a fuel cell. The first passage 148 has an opening 150 disposed in the cavity near the bottom plage 134 and configured to provide the received hydrogen to the water 115. The hydrogen moves or bubbles upward through the water as indicated by arrow 152 and is humidified by the water resulting in wet hydrogen being provided to the top chamber 136 and to the top of each tube and the fuel 127 within the tubes 125 as indicated by arrow 154.

Water from the wet hydrogen reacts with the fuel 127 starting at the top of the tubes 125 and spreading downward through the fuel 127 as indicated by arrow 156 in each of the tubes 125. The reaction produces additional hydrogen which is added to the hydrogen received by the reactor 100. The reaction also produces heat, which is conducted through walls of the tubes to the water 115. The reaction product of the hydrolysis reaction can expand physically.

The dry hydrogen exits the bottom of the tubes 125 into bottom chamber 138 as indicated by arrow 158 and into a second passage 160 of the plenum 145 as indicated by arrow 162. The dry hydrogen progresses up through the second passage 160 as indicated by arrow 164 and out of the second passage 160 as indicated by arrow 166. The dry hydrogen may be provided to the anode of the fuel cell for reaction with oxygen to produce electricity and water, some of which may be added back to the hydrogen received by the reactor 100 via a hydrogen recirculation loop.

The combination of chambers and passages may be thought of or replaced by one or more manifolds configured to direct flow of hydrogen as described. A gas mover, blower or pump etc. may be used to recirculate the dry hydrogen back into the first passage 148 for humidification. The first passage 148 and second passage 160 may be coaxial or adjacent to each other in the plenum 145. In further examples, the first passage 148 and second passage 160 may be separate from each other. The first passage 148, at least at the point that it is exposed to the water 115, may be formed of water vapor permeable hydrophobic membrane to aid in humidifying the hydrogen.

The water 115 is used to both humidify the hydrogen entering the fuel 126 to produce additional hydrogen, and to remove heat generated by the exothermic reaction of the fuel to produce additional hydrogen. Humidification may be performed by atomization of water, evaporation from a wick, sparging, pumping via venturi effect, or humidification from a vapor permeable membrane. Other humidification methods may also be used. As the fuel is consumed, the water level 120 goes down. The reaction site within the fuel 127 also lowers in conjunction with the water level 120 decreasing.

In one example, the amount of water in the cavity 110 may be calculated to be sufficient to result in all the fuel being reacted and operative to keep the tubes 125 within a desired temperature range for proper operation of the reactor 100 in generating hydrogen.

The amount of water may be minimized to reduce the weight of the reactor 100. A water pressure relief valve 170 may be provided in a bottom 172 of the cavity 110 to drain excess water from between bottom 172 and bottom plate 140 which is fluidly coupled to the cavity 110. The pressure relief valve 170 may have a pressure relief value of 17 PSI in one example.

In one example, reactor 100 includes a heatsink 180, a portion of which is shown. The heatsink 180 may be thermally coupled to the bottom 172 of the reactor 100, and hence water 115, and may extend along the full or partial length of the bottom 172. The heatsink 180 may be formed of thermally conductive material, such as metal and have fins or other surface area expanding structure to optimize heat dissipation. The side walls 130 or shell of the reactor 100 may also be used as a heat sink medium.

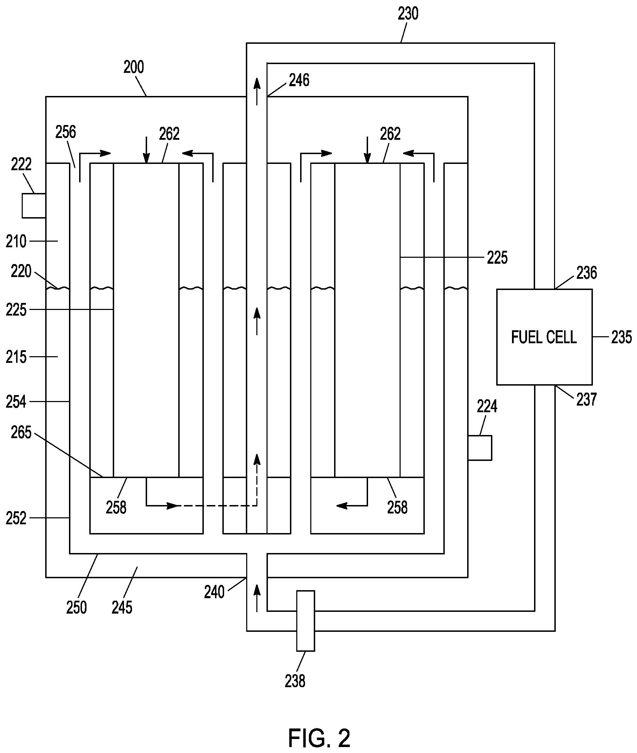

FIG. 2 is a block cross section diagram of an alternative improved hydrogen reactor 200. Reactor 200 operates in a manner similar to reactor 100 in that water operates to both humidify hydrogen for reacting with fuel to produce more hydrogen, and to provide cooling of the reactor 200. One difference is in the manner that hydrogen is humidified through the use of water vapor permeable membranes to better isolate liquid water from the fuel.

The reactor 200 includes a cavity 210 configured to contain or containing water 215 filled to a level 220 via a water fill port 222. A pressure relief valve 224 may be provided through the reactor 200 at a lower point in the cavity 210 to remove water should pressure within the container get above a desired threshold level.

Multiple fuel tubes 225 containing granularized hydrogen fuel, such as LiAH4 are disposed at least partially in the water 215.

Reactor 200 may be coupled via a hydrogen recirculation loop 230 to a fuel cell 235. Fuel cell 235 receives dry hydrogen at and anode input 236 via loop 230 and reacts the hydrogen with oxygen to produce electricity and water and exhaust recirculated hydrogen at an anode output 237 via loop 230. The recirculated hydrogen contains some of the water produced by fuel cell 235. A blower 238 may be included in recirculation loop 230 or within the reactor 200 to aid hydrogen flow through the recirculation loop 230 and reactor 200 at a desire rate, which may be controlled based on sensed electrical generation needs of the fuel cell 235. Arrows are used to represent the direction of flow of hydrogen both in loop 230 and reactor 200.

The wet hydrogen is provided to the reactor 200 at input 240. Reactor 200 includes a multichannel manifold 245 that couples the recirculated hydrogen from the input 240 to multiple channels coupled to further humidify the hydrogen, provide humidified hydrogen to the fuel tubes to add additional hydrogen, and provide the additional hydrogen back to the loop 230 at output 246.

The multichannel manifold 245 includes a first channel 250 having a first end 252 coupled between the hydrogen input 240 and including a water vapor permeable membrane 254 disposed at least partially within the water 215 and a second end 256 coupled to first ends 258 of the multiple fuel tubes 225 to provide humidified hydrogen to the granularized hydrogen fuel. Membrane 254 may be any type of membrane, such as a Nafion^{™} membrane, that provides humidification of water vapor with minimal gas transport. In one example, membrane 254 is hydrophobic.

A second channel 260 of the manifold 245 is coupled to second ends 262 of the multiple fuel tubes 225 to receive additional hydrogen generated by reaction of the humidified hydrogen with the granularized hydrogen fuel. The second channel 260 couples to the output 246 to provide additional hydrogen to the fuel cell 235 via loop 230.

In one example, the tubes 225 and multiple water vapor permeable hydrophobic membranes 254 are arranged in an array to optimize fuel production of the reactor, with relative sizes being optimized to ensure desired hydrogen production and corresponding electricity production. The first channel 250, while shown in tube form, may be in the form of a first channel cavity isolated from the water 215 in cavity 210 by a plate or other structure from which the water vapor permeable hydrophobic membranes 254 extend. The membrane 254 may have a larger surface area exposed to the water 115 in a lower portion of the container to maintain the ability to humidify hydrogen at rate sufficient to enable the fuel cell 235 to generate peak amounts of electricity as the water level 120 goes down.

The fuel tubes 225 may be formed from thin-walled aluminum or other thermally conductive water impermeable material for efficiently transferring heat to the water 215. The thickness of the walls may be calculated to adequately hold the fuel under expected pressures balanced against a desire to reduce an overall weight of the reactor 200. It is also desired to greatly reduce the risk of liquid water directly contacting fuel within the fuel tubes 225 which would cause fast generation of hydrogen gas and associated pressure increases.

The second ends 262 of tubes 225 may be covered with water hydrophobic membranes to help prevent the risk of liquid water directly contacting fuel. First ends 258 of the fuel tubes 225 may also be covered with water hydrophobic membranes to help prevent the risk of liquid water directly contacting fuel. A lower plate or cover 265 may also be placed at the bottom of the cavity 210 to prevent water from contacting the first ends 258 of the fuel tubes 225. The cover 265 has openings corresponding to a perimeter of the fuel tubes 225 to enable the generated hydrogen to pass to the loop 230. In one example, a gas mover, blower or pump may be used to recirculate gas from output 246 to input 240. The fuel cell, shown in the loop 230, may alternatively simply be coupled to the loop 230 to receive hydrogen from the loop 230 without outputting anything back into the loop 230.

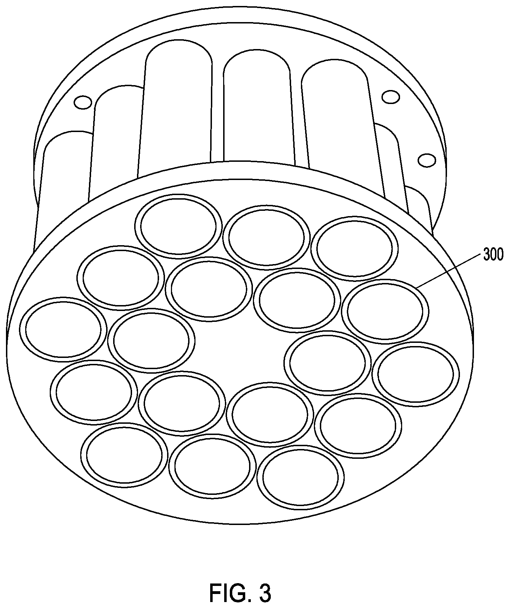

FIG. 3 is a perspective view of a representation of an array of fuel tubes indicated at 300. In one example, the fuel tubes 300 are arranged in rings of 6 tubes and 12 tubes, for 18 tubes total for disposing in a reactor cavity. As in previous examples, the tubes 300 will be filled with hydrogen producing fuel and at least partially submerged or otherwise disposed in water for both cooling and hydrogen input humidification. In one example, each tube may be filled with 13.5g of granularized hydrogen generating fuel.

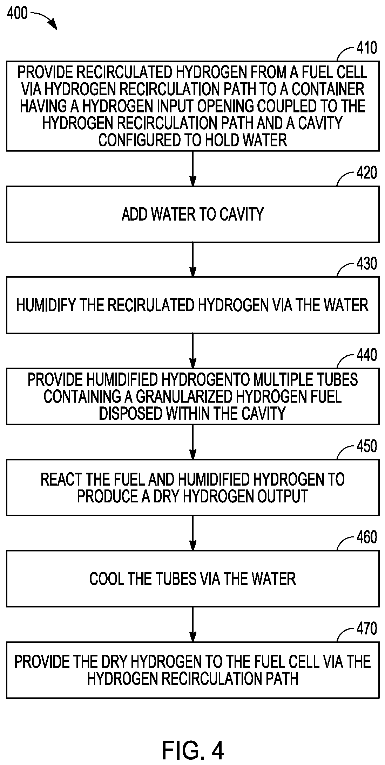

FIG. 4 is a flowchart illustrating a method 400 using water in a hydrogen reactor chamber to both humidify hydrogen for producing additional hydrogen from fuel containing tubes disposed in the water and cool the tubes. Method 400 begins at 410 by providing recirculated hydrogen from a fuel cell via hydrogen recirculation path to a container having a hydrogen input opening coupled to the hydrogen recirculation path and a cavity configured to hold water. Water is added to the cavity at 420. The recirculated hydrogen is humidified via the water at 430 to provide humidified hydrogen. The humidified hydrogen is provided at 440 to multiple tubes containing a granularized hydrogen fuel disposed within the cavity of the container. The fuel and humidified hydrogen are reacted at 450 to produce a dry hydrogen output that includes more hydrogen than the humidified hydrogen. The multiple tubes are cooled at 460 via the water. The dry hydrogen is provided at 470 to the fuel cell via the hydrogen recirculation path.

In one example, fuel consumption is balanced between the multiple tubes utilizing resistance to hydrogen flow caused by reacting the fuel and humidified hydrogen. Heat may be removed from the water via a heat sink. The amount of water may be sufficient to react all the fuel and maintain cooling of the tubes and fuel to maintain the reaction within acceptable temperature ranges.

### Examples:

A hydrogen reactor includes a container having a hydrogen input opening and multiple tubes, containing a granularized hydrogen fuel, disposed within the container. A multichannel manifold is coupled to the multiple tubes within the container to receive recirculated hydrogen via the hydrogen input opening. The reactor includes means for humidifying the hydrogen from water disposed within the container outside the multiple tubes. The multichannel manifold is coupled to the means for humidifying the hydrogen to provide humidified hydrogen to first ends of the multiple tubes and is coupled to second ends of the multiple tubes to receive additional hydrogen generated by reaction of the humidified hydrogen with the granularized hydrogen fuel.

2. The hydrogen reactor of example 1 wherein the means for humidifying the hydrogen comprises a water vapor permeable membrane channel disposed at least partially within water in the container and having a first end coupled to receive the recirculated hydrogen from the multichannel manifold and a second end coupled to a first end of the multiple tubes.

3. The hydrogen reactor of any of examples 1-2 wherein water surrounds the multiple tubes to transfer heat generated by the reaction away from the hydrogen generating fuel.

4. The hydrogen reactor of any of examples 1-3 wherein the hydrogen generating fuel includes a chemical hydride.

5. The hydrogen reactor of any of examples 1-4 wherein the hydrogen generating fuel includes LiAlH4.

6. The hydrogen reactor of any of examples 1-5 wherein the multiple tubes are formed of aluminum and are held in a fixed position spaced apart relationship by the manifold.

7. The hydrogen reactor of example 6 wherein the aluminum forming the multiple tubes is configured to transfer heat to the water.

8. The hydrogen reactor of any of examples 1-7 wherein the reaction results in expansion of the granularized hydrogen fuel, increasing resistance to hydrogen flow and balancing fuel consumption between the multiple tubes.

9. The hydrogen reactor of example 8 wherein the hydrogen reactor is configured to be oriented in an upright position with fuel being consumed in the multiple tubes in a top to down manner.

10. The hydrogen reactor of any of examples 1-9 and further including a heat sink coupled to the container and positioned to transfer heat away from the water.

11. The hydrogen reactor of any of examples 1-10 wherein the means for humidifying the hydrogen includes the water coupled to a first opening of the multichannel manifold to receive the recirculated hydrogen.

12. A hydrogen reactor includes a container having a hydrogen input opening and a cavity configured to hold water, multiple tubes, containing a granularized hydrogen fuel, disposed within the cavity of the container, and a multichannel manifold coupled to the multiple tubes within the container to receive recirculated hydrogen via the hydrogen input opening. The manifold includes a first channel of the manifold having a first end coupled between the hydrogen input opening and including a water vapor permeable membrane disposed at least partially within the water and a second end coupled to first ends of the multiple tubes to provide humidified hydrogen to the granularized hydrogen fuel, and a second channel coupled to second ends of the multiple tubes to receive additional hydrogen generated by reaction of the humidified hydrogen with the granularized hydrogen fuel.

13. The hydrogen reactor of example 12 wherein the first channel, multiple tubes, and the second channel include an anode hydrogen loop configured to couple to an anode of a fuel cell, the hydrogen reactor further including a blower coupled to move hydrogen through the anode hydrogen loop.

14. The hydrogen reactor of any of examples 12-13 wherein water surrounds the multiple tubes to transfer heat generated by the reaction away from the hydrogen generating fuel.

15. The hydrogen reactor of any of examples 12-14 wherein the hydrogen generating fuel includes a chemical hydride.

16. The hydrogen reactor of any of examples 12-15 wherein the reaction results in expansion of the granularized hydrogen fuel, increasing resistance to hydrogen flow and balancing fuel consumption between the multiple tubes.

17. The hydrogen reactor of example 16 wherein the hydrogen reactor is configured to be oriented in an upright position with fuel being consumed in the multiple tubes in a top to down manner.

18. A method incudes providing recirculated hydrogen from a fuel cell via hydrogen recirculation path to a container having a hydrogen input opening coupled to the hydrogen recirculation path and a cavity holding water, humidifying the recirculated hydrogen via the water to provide humidified hydrogen, providing the humidified hydrogen to multiple tubes containing a granularized hydrogen fuel disposed within the cavity of the container, reacting the fuel and humidified hydrogen to produce a dry hydrogen output that includes more hydrogen than the humidified hydrogen, cooling the multiple tubes via the water, and providing the dry hydrogen to the fuel cell via the hydrogen recirculation path.

19. The method of example 18 and further including balancing fuel consumption between the multiple tubes utilizing resistance to hydrogen flow caused by reacting the fuel and humidified hydrogen.

20. The method of example 19 and further including removing heat from the water via a heat sink, wherein an amount of the water is sufficient to react all the fuel.

Although a few embodiments have been described in detail above, other modifications are possible. For example, the structures and logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

## Claims

1. A hydrogen reactor [100, 200] comprising:
a container [130, 134, 137, 200] having a hydrogen input opening [149, 240];
multiple tubes [125, 225], containing a granularized hydrogen fuel [127], disposed within the container;
a multichannel manifold [145,245] coupled to the multiple tubes within the container to receive recirculated hydrogen via the hydrogen input opening;
means for humidifying the hydrogen from water [115, 215] disposed within the container outside the multiple tubes;
wherein the multichannel manifold is coupled to the means for humidifying the hydrogen to provide humidified hydrogen to first ends [258] of the multiple tubes and is coupled to second ends [262] of the multiple tubes to receive additional hydrogen generated by reaction of the humidified hydrogen with the granularized hydrogen fuel.

2. The hydrogen reactor of claim 1 wherein the means for humidifying the hydrogen comprises a water vapor permeable membrane channel disposed at least partially within water [115, 245] in the container and having a first end coupled to receive the recirculated hydrogen from the multichannel manifold and a second end coupled to a first end of the multiple tubes.

3. The hydrogen reactor of claim 1 wherein water surrounds the multiple tubes to transfer heat generated by the reaction away from the hydrogen generating fuel.

4. The hydrogen reactor of claim 1 wherein the hydrogen generating fuel comprises a chemical hydride.

5. The hydrogen reactor of claim 1 wherein the hydrogen generating fuel comprises LiAlH4.

6. The hydrogen reactor of any one of claims 1-5 wherein the multiple tubes are formed of aluminum and are held in a fixed position spaced apart relationship by the manifold.

7. The hydrogen reactor of claim 6 wherein the aluminum forming the multiple tubes is configured to transfer heat to the water.

8. The hydrogen reactor of any one of claims 1-5 wherein the reaction results in expansion of the granularized hydrogen fuel, increasing resistance to hydrogen flow and balancing fuel consumption between the multiple tubes.

9. The hydrogen reactor of claim 8 wherein the hydrogen reactor is configured to be oriented in an upright position with fuel being consumed in the multiple tubes in a top to down manner.

10. The hydrogen reactor of any one of claims 1-5 and further comprising a heat sink [180] coupled to the container and positioned to transfer heat away from the water.

11. The hydrogen reactor of any one of claims 1-5 wherein the means for humidifying the hydrogen comprises the water coupled to a first opening of the multichannel manifold to receive the recirculated hydrogen.

12. A hydrogen reactor [100, 200] comprising:
a container [130, 134, 137, 200] having a hydrogen input opening [149, 240] and a cavity [110, 210] configured to hold water [115, 215];
multiple tubes [125, 225], containing a granularized hydrogen fuel [127], disposed within the cavity of the container; and
a multichannel manifold [145, 245] coupled to the multiple tubes within the container to receive recirculated hydrogen via the hydrogen input opening, the manifold comprising:
a first channel [250] of the manifold having a first end [252] coupled between the hydrogen input opening and including a water vapor permeable membrane [254] disposed at least partially within the water and a second end [256] coupled to first ends of the multiple tubes to provide humidified hydrogen to the granularized hydrogen fuel; and
a second channel [260] coupled to second ends [262] of the multiple tubes to receive additional hydrogen generated by reaction of the humidified hydrogen with the granularized hydrogen fuel.

13. The hydrogen reactor of claim 12 wherein the first channel, multiple tubes, and the second channel comprise an anode hydrogen loop configured to couple to an anode of a fuel cell [235], the hydrogen reactor further comprising a blower [238] coupled to move hydrogen through the anode hydrogen loop.

14. The hydrogen reactor of any one of claims 12-13 wherein the hydrogen generating fuel comprises a chemical hydride and wherein the reaction results in expansion of the granularized hydrogen fuel, increasing resistance to hydrogen flow and balancing fuel consumption between the multiple tubes, and wherein the hydrogen reactor is configured to be oriented in an upright position with fuel being consumed in the multiple tubes in a top to down manner.

15. A method comprising:
providing [410] recirculated hydrogen from a fuel cell via hydrogen recirculation path to a container having a hydrogen input opening coupled to the hydrogen recirculation path and a cavity holding [420] water;
humidifying [430] the recirculated hydrogen via the water to provide humidified hydrogen;
providing [440] the humidified hydrogen to multiple tubes containing a granularized hydrogen fuel disposed within the cavity of the container;
reacting [450] the fuel and humidified hydrogen to produce a dry hydrogen output that includes more hydrogen than the humidified hydrogen;
cooling [460] the multiple tubes via the water; and
providing [470] the dry hydrogen to the fuel cell via the hydrogen recirculation path.
